# EUROPÄISCHE PATENTSCHRIFT

(11) **EP 3 254 362 B1**
(45) Veröffentlichungstag und Bekanntmachung des Hinweises auf die Patenterteilung: **04.03.2020**
(21) Anmeldenummer: 16701341.6
(22) Anmeldetag: 22.01.2016
(51) Int. Cl.: H02K 5/16, H02K 5/15, H02K 5/20

(54) **ELEKTRISCHE MASCHINE**
ELECTRIC MACHINE
MACHINE ÉLECTRIQUE

(30) Priorität: 03.02.2015 CH 1302015
(43) Veröffentlichungstag der Anmeldung: 13.12.2017
(73) Patentinhaber: Reishauer AG, 8304 Wallisellen (CH)
(72) Erfinder: JAKOB, Ronald, 8332 Russikon (CH); FÜRDERER, Roman, 8262 Ramsen (CH); SENNHAUSER, Erwin, 8451 Kleinandelfingen (CH)
(74) Vertreter: Detken, Andreas
(86) Internationale Anmeldenummer: PCT/EP2016/051360
(87) Internationale Veröffentlichungsnummer: WO 2016/124426

(56) Entgegenhaltungen:
- WO-A2-2013/087255
- DE-A1-102009 001 948
- US-A1- 2013 136 630

## Beschreibung

### TECHNISCHES GEBIET

Die vorliegende Erfindung betrifft eine elektrische Maschine, die einen Rotor, einen den Rotor radial umgebenden Stator und ein den Stator radial umgebendes Gehäuse aufweist, sowie ein Herstellverfahren für eine solche elektrische Maschine. Bei der elektrischen Maschine kann es sich insbesondere um eine Motorspindel für eine Werkzeugmaschine handeln, die zum Antrieb eines rotierenden Werkzeugs oder Werkstücks dienen kann. Bei der Werkzeugmaschine kann es sich insbesondere um eine Zahnradfeinbearbeitungsmaschine, z.B. eine Zahnradschleifmaschine, handeln.

### STAND DER TECHNIK

Bekannte Motorspindeln weisen eine drehbare Spindelwelle auf, die in einem Festlager und einem Loslager gelagert ist. Zur Aufnahme der beiden Lager sind an Spindelnase und Spindelende Lagerdeckel ausgebildet, wobei die Festlager in der Regel direkt in einer Bohrung in der Gehäusehülse sitzen und der Lagerdeckel nur zur axialen Positionierung der Festlager dient und die Loslager in der Regel in einer Bohrung im Lagerdeckel sitzen. Die Spindelwelle trägt den Rotor eines elektrischen Motors. Der Rotor ist vom Stator des Motors umgeben. Dieser Stator ist in einem feststehenden Gehäuse angeordnet.

So offenbart z.B. die DE 103 28 800 A1 eine elektrische Maschine mit einem Rotor, einem den Rotor umgebenden Stator und einem den Stator umgebenden Gehäuse. Der Stator ist mit Hilfe von verformbaren Schienen durch einen Presssitz in das Gehäuse eingepasst.

Im Betrieb entsteht im Stator eine elektrische Verlustleistung, die zu einer Erwärmung des Stators und der daran angrenzenden Bauteile führt. Diese Bauteile bestehen aus unterschiedlichen Materialien, und bei Erwärmung entstehen Verspannungen, die nachteilige Folgen für das Verhalten der Motorspindel haben können. Deshalb ist bei grösseren Leistungen eine adäquate Kühlung des Stators erforderlich.

Aus dem Stand der Technik ist es bekannt, den Stator in einer Statorhülse anzuordnen, an der ein Kühlmedium vorbeigeleitet wird. So offenbart die EP 1 271 747 A1 einen elektrischen Motor mit einem Rotor, einem den Rotor umgebenden Stator, der radial nach aussen durch eine Statorhülse begrenzt ist, und einem den Stator umgebenden Gehäuse. Das Gehäuse ist am antriebsseitigen und am antriebsfernen Ende jeweils durch einen Flansch abgeschlossen. Die Statorhülse ist an beiden Enden an jeweils einem der Flansche abgestützt.

Allerdings wird sich der Stator in der Regel im Betrieb trotz Kühlung gegenüber dem Gehäuse erwärmen. Dies führt zu einer thermischen Ausdehnung der Statorhülse gegenüber dem Gehäuse. Daraus können beträchtliche thermische Spannungen resultieren. Wenn beispielsweise die Statorhülse aus Stahl gefertigt ist, eine Länge von 200 Millimetern aufweist und sich im Betrieb auch nur um 2 K zum Gehäuse erwärmt, wächst die Länge der Statorhülse gegenüber dem Gehäuse um ca. 5 Mikrometer. Dies entspricht schon der Grössenordnung einer üblichen Lagervorspannung. In der Praxis können noch weitaus grössere Temperaturdifferenzen auftreten, aus denen deutlich grössere relative Längenänderungen resultieren können. Diese können bis in den Bereich von 100 Mikrometer kommen. Es leuchtet ein, dass solche Längenausdehnungen ohne spezielle technische Massnahmen zu erheblichen Beanspruchungen und Verformungen, bis hin zu irreversiblen Schädigungen des gesamten Spindelsystems, fuhren können.

Es ist daher bekannt, den Stator nur an einem Ende mit dem Gehäuse zu verbinden. Das andere Ende des Stators bleibt dann frei. Dadurch kann sich der Stator bei Erwärmung ungehindert ausdehnen, ohne dass in der Motorspindel thermische Spannungen auftreten. Eine derartige Anordnung ist z.B. aus dem Projektierungshandbuch "Synchron-Einbaumotoren 1FE1", Ausgabe 09/2008, Siemens AG, Best.-Nr. 6SN1 197-0AC00-1AP0, Seiten 1-15 bis 1-18 bekannt.

Allerdings kann eine solche Anordnung zu starken Torsionsschwingungen des freien Endes des Stators führen. Die Torsionsschwingungen erreichen bei Resonanzen im unteren Frequenzbereich hohe Amplituden, die dann auf das dynamische System der Motorspindel sehr störend einwirken können. Gerade bei Motorspindeln für den Antrieb von Werkzeugen oder Werkstücken in Feinbearbeitungsmaschinen ist dies besonders problematisch, da bei solchen Maschinen prozessbedingt hohe, schnell veränderliche Drehmomente zwischen Rotor und Stator übertragen werden, die die Anregung von Torsionsschwingungen begünstigen.

WO 2013/087255 A2 offenbart eine Statoranordnung für eine elektrische Maschine, die einen Stator, ein Lagerschild zur Lagerung des Rotors und ein Entkoppelelement zur Entkopplung von möglichen Schwingungen des Stators aufweist. Das Entkoppelelement ist einerseits mit dem Stator und andererseits mit dem Lagerschild oder einem mit dem Lagerschild verbundenen Massebauteil verbunden. Das Entkoppelelement kann als dünnwandiger Zylinder mit einer Vielzahl von Durchgangsöffnungen ausgebildet sein.

DE 10 2009 001 948 A1 offenbart ein Lagerschild eines elektromotorischen Antriebs. Das Lagerschild weist einen Innenring zur Aufnahme eines Lagers und einen mit dem Innenring einstückig durch federelastische Elemente verbundenen Aussenring zur Einpassung in einem Gehäuse auf. Das Lagerschild besteht zumindest teilweise aus einem elastisch verformbaren Kunststoffmaterial.

### DARSTELLUNG DER ERFINDUNG

Es ist daher eine Aufgabe der vorliegenden Erfindung, eine elektrische Maschine anzugeben, die beim Auftreten von prozessbedingter Wärme axiale Verspannungen weitgehend vermeidet und insgesamt das Schwingungsverhalten einer Motorspindel verbessert.

Diese Aufgabe wird durch eine elektrische Maschine mit den Merkmalen des Anspruchs 1 gelöst. Weitere Ausführungsformen sind in den abhängigen Ansprüchen angegeben.

Es wird also eine elektrische Maschine vorgeschlagen, welche aufweist:
einen Rotor, der um eine Rotationsachse drehbar gelagert ist und mit seiner Rotationsachse eine Axialrichtung definiert;
einen den Rotor radial umgebenden Stator; und
ein den Stator radial umgebendes Gehäuse.
Um die Neigung des Stators zu Torsionsschwingungen zu vermindern und gleichzeitig thermische Spannungen zu vermeiden, ist der Stator an seinem distalen und/oder proximalen Ende radial und torsional steif, aber axial beweglich mit dem Gehäuse verbunden.

Zumindest an einem Ende des Stators wird somit eine Verbindung zum Gehäuse geschaffen, die das betreffende Ende zwar in Umfangsrichtung und in radialer Richtung mit hoher Steifigkeit fixiert, also Bewegungen in diesen Richtungen verhindert, die aber eine axiale Beweglichkeit des betreffenden Endes ermöglicht. Dadurch wird eine Überbestimmung des Systems aus Gehäuse und Stator vermieden, die zu unerwünschten Spannungen in axialer Richtung führen kann. Gleichzeitig wird die Neigung zu Torsionsschwingungen wirksam vermindert. Dies äussert sich hierbei in höheren Frequenzen und geringeren Amplituden der Resonanzen im unteren Frequenzbereich, die im Betrieb sehr störend wirken können.

Bevorzugt ist der Stator an einem Ende axial, radial und torsional steif (also insgesamt starr) mit dem Gehäuse verbunden und nur am anderen Ende axial beweglich mit dem Gehäuse verbunden. Auf diese Weise wird die Verbindung des Stators mit dem Gehäuse vereinfacht und die Neigung zu Schwingungen minimiert. Als distales Ende wird in diesem Fall dasjenige Ende bezeichnet, das starr mit dem Gehäuse verbunden ist.

Wenn der Stator am distalen Ende starr mit dem Gehäuse verbunden ist und diese Verbindung weiterhin so gestaltet ist, dass sie Biegemomente aufnehmen kann (z.B. bei einer Verschraubung), wird durch die erfindungsgemässe Ausgestaltung zusätzlich auch das Gehäuse bezüglich Biegungen versteift. Biegeschwingungen können insbesondere dadurch angeregt werden, dass prozessbedingte Biegemomente vom Rotor über die Lager auf das Gehäuse übertragen werden. Die erfindungsgemässe Lösung führt auch bei diesen Schwingungen zu höheren Frequenzen und geringeren Amplituden. Damit kann auch der negative Einfluss dieser Schwingungen auf den Betrieb reduziert werden.

Der Stator kann eine den Stator bevorzugt radial nach aussen begrenzende Statorhülse mit einem distalen ersten Ende und einem proximalen zweiten Ende umfassen. Das eigentliche Statorpaket, das in der Regel einen Verbund aus Statorspulen umfasst, die z.B. mit einer Vergussmasse vergossen sein können, kann dann starr in diese Statorhülse eingepasst, z.B. eingeklebt, eingegossen oder eingepresst sein. In diesem Fall ist es bevorzugt, dass die mechanische Verbindung des Stators mit dem Gehäuse im Wesentlichen ausschliesslich über die Statorhülse erfolgt. In anderen Worten ist es bevorzugt, wenn die Kraftübertragung zwischen Stator und Gehäuse ausschliesslich über die Statorhülse erfolgt. In diesem Fall ist es also die Statorhülse, die an ihrem distalen und/oder proximalen Ende radial und torsional steif, aber axial beweglich mit dem Gehäuse verbunden ist. Bevorzugt ist in diesem Fall die Statorhülse an ihrem distalen Ende starr (d.h. axial, radial und torsional steif) mit dem Gehäuse verbunden, und nur am proximalen Ende besteht eine axiale Beweglichkeit. Es ist aber auch denkbar, die axiale Beweglichkeit der Statorhülse gegenüber dem Gehäuse auf beide Enden der Statorhülse zu verteilen, insbesondere die axiale Beweglichkeit gleichmässig (d.h. mit im Wesentlichen gleicher axialer Federkonstante) zu verteilen.

Bei der elektrischen Maschine handelt es sich vorzugsweise um eine Motorspindel für eine Werkzeugmaschine, insbesondere für eine Zahnradfeinbearbeitungsmaschine. Insbesondere kann es sich um eine Werkzeugspindel und/oder um eine Werkstückspindel einer Zahnradfeinbearbeitungsmaschine handeln, wobei unter einer Werkzeugspindel insbesondere auch eine Spindel für das Abrichtwerkzeug zu verstehen ist. Bei der elektrischen Maschine kann es sich aber auch um eine andere Art von Motor oder um einen elektrischen Generator handeln.

Bei Motorspindeln umfasst der Rotor eine Spindelwelle, die an der Spindelnase aus dem Gehäuse herausgeführt ist, um eine Nutzlast mit der Spindelwelle zu verbinden. Die Spindelnase wird im Folgenden auch als abtriebsseitiges Ende der Motorspindel bezeichnet. Am anderen, abtriebsfernen Spindelende werden häufig Leitungen für Hydrauliköl und/oder Druckluft sowie Kühlöl aus dem Gehäuse herausgeführt.

Wenn das distale Ende des Stators starr mit dem Gehäuse verbunden ist, weist dieses Ende vorzugsweise zur Spindelnase hin. Entsprechend weist das proximale axial bewegliche Ende des Stators in diesem Fall bevorzugt zum abtriebsfernen Spindelende hin. Es ist aber auch eine umgekehrte Anordnung denkbar.

Der Rotor ist im Gehäuse drehbar gelagert. Dabei existieren vorzugsweise mindestens zwei Lagerstellen zwischen dem Rotor und dem Gehäuse oder mit dem Gehäuse starr verbundenen Elementen. Die erste (distale) Lagerstelle befindet sich vorzugsweise distal vom distalen Ende des Stators, im Falle einer Motorspindel bevorzugt in axialer Richtung betrachtet zwischen dem distalen Ende des Stators und der Spindelnase. Die zweite (proximale) Lagerstelle befindet sich vorzugsweise proximal vom proximalen Ende des Stators, im Falle einer Motorspindel bevorzugt in axialer Richtung betrachtet zwischen dem proximalen Ende des Stators und dem abtriebsfernen Spindelende. Die distale Lagerstelle ist vorzugsweise axial als Festlager ausgebildet, während die proximale Lagerstelle axial als Loslager ausgebildet ist. In einigen Fällen kann auf die proximale Lagerstelle verzichtet werden, insbesondere wenn der Rotor und der Stator, im Verhältnis zum Rotordurchmesser kurz gestaltet werden können. Die Rollen von Festlager und Loslager können aber auch vertauscht sein. Die Lager können in an sich bekannter Weise ausgebildet sein.

Wie schon ausgeführt wurde, ist der Stator an mindestens einem Ende radial und torsional steif, aber axial beweglich mit dem Gehäuse verbunden. Diese Verbindung ist radial und torsional vorzugsweise spielfrei. Eine radial und torsional spielfreie, steife, aber axial bewegliche Verbindung eines Endes des Stators mit dem Gehäuse kann dadurch erreicht werden, dass das betreffende Ende des Stators (insbesondere der Statorhülse) über einen axial nachgiebigen Materialbereich mit dem Gehäuse verbunden ist. Dabei ist es bevorzugt, wenn der axial nachgiebige Materialbereich in Axialrichtung bei linearer Näherung eine Axialsteife (Federkonstante im Hooke'schen Gesetz) von höchstens 5000 Newton pro Mikrometer, insbesondere höchstens 2'000 Newton pro Mikrometer, besonders bevorzugt höchstens 500 Newton pro Mikrometer für kleine axiale Auslenkungen im Bereich von einigen Mikrometern (z.B. von 5-100 Mikrometern) aufweist. Andererseits ist das betreffende Ende des Stators aber vorzugsweise axial nicht vollständig frei, sondern in definierter Weise axial mit dem Gehäuse verbunden, d.h. es wirkt eine Axialkraft auf das betreffende Ende, die sich bei axialen Auslenkungen des betreffenden Endes verändert. So ist es bevorzugt, wenn an diesem Ende eine axiale Federkonstante von mindestens ca. 100 Newton pro Mikrometer zwischen dem Statorende und dem Gehäuse wirkt. Falls das distale Ende starr mit dem Gehäuse verbunden ist, ist am distalen Ende die Verbindung zwischen Stator (bzw. Statorhülse) und Gehäuse dagegen vorzugsweise axial in einem solchen Mass steif, dass eine Federkonstante nicht sinnvoll definiert werden kann bzw. in praktischer Hinsicht als gegen unendlich gross angesehen werden kann. Für Auslenkungen in Umfangsrichtung (Torsion) und in radialer Richtung (Biegung) ist die Verbindung zum Gehäuse sowohl am distalen als auch am proximalen Ende des Stators bzw. der Statorhülse hochsteif.

Der axial nachgiebige Materialbereich kann insbesondere ringflanschförmig sein. Er bildet in diesem Fall einen ringförmigen Bereich, der sich zwischen dem Stator bzw. der Statorhülse und einem Gehäuseelement zumindest teilweise in radialer Richtung erstreckt.

Vorzugsweise weist ein ringflanschförmiger, axial nachgiebiger Materialbereich in axialer Richtung eine Materialstärke (Dicke) auf, die kleiner als seine Ausdehnung (Breite) in radialer Richtung ist. Ein solcher ringflanschförmiger Materialbereich ermöglicht eine axiale Beweglichkeit dadurch, dass sich der Materialbereich in Axialrichtung um einen Teilkreis herum verbiegt, wenn auf seinen Innenumfang relativ zu seinem Aussenumfang eine axiale Kraft einwirkt. Wenn beispielsweise der axial nachgiebige Materialbereich aus Stahl ausgebildet ist, ist es bevorzugt, wenn er in Axialrichtung eine Dicke von 0.5 bis 8 Millimetern, bevorzugt von 1.5 bis 5 Millimetern, besonders bevorzugt von 2 bis 3 Millimetern aufweist. In Radialrichtung ist es bevorzugt, wenn der axial nachgiebige Materialbereich eine radiale Breite von 5 bis 30 Millimeter, bevorzugt von 10 bis 15 Millimetern, aufweist.

Der ringflanschförmige, axial nachgiebige Materialbereich kann an seinem Innenumfang mit dem Stator bzw. der Statorhülse und an seinem Aussenumfang mit dem Gehäuseelement verbunden sein oder umgekehrt. Beide Verbindungen sind dann axial, radial und torsional steif auszubilden.

Der axial nachgiebige Materialbereich kann insbesondere einstückig mit einem Gehäuseelement ausgebildet und axial, radial und torsional steif mit dem Stator bzw. der Statorhülse verbunden sein. Bei dem Gehäuseelement kann es sich insbesondere um einen Lagerdeckel handeln, der ein Lager für den Rotor trägt. Der axial nachgiebige Materialbereich kann aber auch einstückig mit der Statorhülse ausgebildet und axial, radial und torsional steif mit einem separat ausgebildeten Gehäuseelement, z.B. dem erwähnten Lagerdeckel oder einem Flansch einer Gehäusehülse, verbunden sein.

Der axial nachgiebige Materialbereich kann an einem Haltering ausgebildet sein, der separat vom Stator bzw. von der Statorhülse und vom Gehäuse ausgebildet ist. Der Haltering ist an seinem Innenumfang mit dem Stator bzw. der Statorhülse und an seinem Aussenumfang mit dem Gehäuse (oder umgekehrt) axial, radial und torsional steif verbunden. Der Haltering kann z.B. mit einem ersten Klemmring auf die Statorhülse und durch einen zweiten Klemmring auf das Gehäuse aufgepresst sein, um jeweils einen Reibschluss herzustellen. In diesem Fall ist der Haltering am Innenumfang axial zwischen dem ersten Klemmring und der Statorhülse geklemmt, und der erste Klemmring ist mit Schrauben oder anderen Befestigungsmitteln mit der Statorhülse verbunden. Entsprechend ist der Haltering am Aussenumfang axial zwischen dem zweiten Klemmring und einem Gehäuseelement geklemmt, und der zweite Klemmring ist mit Schrauben oder anderen Befestigungsmitteln mit dem Gehäuseelement verbunden. Die Rollen von Innen- und Aussenumfang können vertauscht sein. Selbstverständlich sind auch andere Arten von Verbindungen zwischen dem Haltering und dem Stator bzw. dem Gehäuse möglich. Der Haltering kann aus Metall gefertigt sein, insbesondere aus Stahl, kann aber auch aus Kunststoff bestehen, insbesondere aus einem faserverstärkten (z.B. glasfaserverstärkten oder carbonfaserverstärkten) Kunststoff. Ein Vorteil eines separat gefertigten Halterings besteht darin, dass seine Form und Materialstärke gezielt angepasst werden können.

Es sind weiterhin mehrstückige Teile denkbar, bei denen im axial nachgiebigen Materialbereich viskoelastisches Material angeordnet wird. In diesem Fall wird nicht nur eine axiale Beweglichkeit des betreffenden Endes des Stators ermöglicht, sondern es werden auch Schwingungen des betreffenden Endes gedämpft. Dazu kann z.B. durch Vulkanisieren im axial nachgiebigen Materialbereich ein viskoelastisches Material wie Gummi, Nitrilkautschuk (NBR) oder ähnliche Materialien eingebaut werden.

In bestimmten Situationen kann es von Vorteil sein, wenn der Stator bzw. die Statorhülse bei Normalbedingungen gegenüber dem Gehäuse axial auf Druck oder auf Zug vorbelastet ist. In anderen Worten kann es von Vorteil sein, wenn der Stator an seinen Enden derart mit dem Gehäuse verbunden ist, dass eine axiale Zugkraft oder eine axiale Druckkraft auf den Stator wirkt, wenn sowohl der Stator bzw. die Statorhülse als auch das Gehäuse die gleiche Temperatur, insbesondere Raumtemperatur (20 °C) aufweisen. Eine axiale Druckkraft kann insbesondere dann vorteilhaft sein, wenn am distalen Ende des Stators eine starre, formschlüssige Verbindung besteht, wie sie nachstehend noch näher beschrieben wird. Die axiale Druckkraft kann dann zur Aufrechterhaltung der formschlüssigen Verbindung am distalen Ende des Stators beitragen. Eine axiale Zugkraft kann dagegen von Vorteil sein, wenn eine starre Verbindung am distalen Ende des Stators auf andere Weise hergestellt ist, z.B. mit Hilfe von Schrauben, oder wenn beide Enden des Stators axial beweglich mit dem Gehäuse verbunden sind. In diesem Fall vermindert sich die axiale Zugkraft zwischen Stator und Gehäuse aufgrund der Längenausdehnung des Stators, wenn sich der Stator gegenüber dem Gehäuse erwärmt. Idealerweise vermindert sich die axiale Zugkraft im Normalbetrieb nahezu bis Null. Auf diese Weise können mechanische Spannungen in der elektrischen Maschine im Normalbetrieb minimiert werden.

Alle axial, radial und torsional steifen Verbindungen (also insbesondere die starre Verbindung zwischen dem distalen Ende des Stators und dem Gehäuse, sofern vorhanden, oder die Verbindung zwischen dem axial nachgiebigen Bereich und dem betreffenden Ende des Stators oder dem Gehäuse) können reibschlüssig oder formschlüssig ausgeführt sein. Eine reibschlüssige Verbindung kann erreicht werden, indem die betreffenden Teile durch geeignete Schraubelemente und/oder Federelemente mit entsprechenden Befestigungselementen axial aneinandergepresst werden. Dazu kann eines der Teile (insbesondere das distale und/oder proximale Ende der Statorhülse) eine ringförmige axiale Stirnfläche, vorzugsweise mit hohem Reibwert, oder eine konische Anpressfläche (einen koaxialen Reibkegel) aufweisen, und das andere Teil (insbesondere ein Gehäuseelement) kann eine entsprechend komplementär ausgebildete Gegenfläche aufweisen. Eine konische Anpressfläche hat den Vorteil, dass einerseits eine grössere Reibkraft und damit eine grössere Torsionssteifigkeit resultieren können. Andererseits trägt eine koaxial zur Rotationsachse angeordnete konische Fläche auch zur korrekten Zentrierung des Stators bei.

Bei einer formschlüssigen Verbindung ist bevorzugt, wenn diese spielfrei ausgebildet ist. Dazu kann insbesondere eine Hirth-Verzahnung zwischen dem Stator bzw. der Statorhülse und dem Gehäuse vorgesehen sein. Alternativ können aber auch andere Elemente zum Einsatz kommen, um eine spielfreie formschlüssige Verbindung herzustellen, wie Kegelstifte, Keile, Exzenter usw.

Die Statorhülse ist vorzugsweise als Kühlhülse ausgebildet. Dazu sind zwischen der Statorhülse und dem Gehäuse vorzugsweise ein oder mehrere Kühlkanäle zur Durchleitung eines fluiden Kühlmediums, insbesondere Wasser, Öl oder Luft, ausgebildet. Diese Kühlkanäle können insbesondere durch eine oder mehrere Vertiefungen/Nuten oder Rippen auf der Aussenseite der Statorhülse, z.B. durch eine oder mehrere schraubenförmig verlaufende Nuten oder Rippen, gebildet sein. Zwischen der Statorhülse und dem Gehäuse können Dichtungen vorhanden sein, die die Kühlkanäle nach aussen hin abdichten.

Um eine elektrische Maschine der obengenannten Art herzustellen, bei der die Statorhülse gezielt axial auf Druck oder auf Zug vorbelastet ist oder von Axialkräften möglichst entlastet ist, wird ein Verfahren vorgeschlagen, bei dem zunächst eine Statorhülse und ein mit einem Ende der Statorhülse zu verbindendes Element (insbesondere ein Gehäuseelement wie z.B. ein proximaler Lagerdeckel, oder ein Haltering) mit axialem Übermass zueinander bereitgestellt werden. Das Verfahren umfasst dann ein Nachbearbeiten des betreffenden Endes der Statorhülse und/oder des mit dem betreffenden Ende der Statorhülse zu verbindenden Elements derart, dass entweder ein axiales Übermass bestehen bleibt, um nach der Montage eine axiale Druckkraft auf die Statorhülse auszuüben, oder dass ein axiales Abmass (d.h. vor dem Herstellen der Verbindung ein Luftspalt) erzeugt wird, um nach der Montage eine axiale Zugkraft auf die Statorhülse auszuüben, oder es umfasst eine Nachbearbeitung, um die Teile auf ein annähernd gleiches Mass zu bringen. Anschliessend werden die Statorhülse und das Element miteinander verbunden. Dieses Herstellverfahren für eine definierte axiale Zugkraft oder eine axiale Druckkraft benötigt sowohl für den Stator bzw. die Statorhülse als auch das Gehäuse eine gleiche Temperatur, insbesondere eine Raumtemperatur von ca. 20°C.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine perspektivische Teilschnittdarstellung einer Motorspindel gemäss einer ersten Ausführungsform;
- Fig. 2: das Detail A der Figur 1, welches eine erste Verbindungsstelle zwischen der Statorhülse und dem Spindelgehäuse der Motorspindel zeigt;
- Fig. 3: das Detail B der Figur 1, welches eine erste Verbindungsstelle zwischen der Statorhülse und dem Lagerdeckel der Motorspindel zeigt;
- Fig. 4: eine perspektivische Teilschnittdarstellung des Lagerdeckels der Motorspindel der Figur 1;
- Fig. 5: eine perspektivische Teilschnittdarstellung des Lagerdeckels einer Motorspindel gemäss einer zweiten Ausführungsform;
- Fig. 6: eine perspektivische Explosionsdarstellung einer Motorspindel im Teilschnitt gemäss einer dritten Ausführungsform;
- Fig. 7: das Detail C der Figur 6, welches eine erste Verbindungsstelle zwischen der Statorhülse und dem Spindelgehäuse der Motorspindel zeigt;
- Fig. 8: das Detail D der Figur 6, welches eine erste Verbindungsstelle zwischen der Statorhülse und dem Lagerdeckel der Motorspindel zeigt;
- Fig. 9: eine Prinzipskizze zur Illustration der Fertigung eines Lagerdeckels;
- Fig. 10: eine perspektivische Schnittdarstellung eines Details einer Motorspindel gemäss einer vierten Ausführungsform;
- Fig. 11: eine perspektivische Ansicht einer Statorhülse einer Motorspindel gemäss einer fünften Ausfuhrungsform;
- Fig. 12: eine perspektivische Teilschnittdarstellung einer Statorhülse einer Motorspindel gemäss einer sechsten Ausführungsform;
- Fig. 13: eine perspektivische Teilschnittdarstellung einer Statorhülse einer Motorspindel gemäss einer siebenten Ausführungsform;
- Fig. 14: eine perspektivische Teilschnittdarstellung einer Statorhülse einer Motorspindel gemäss einer achten Ausführungsform;
- Fig. 15: eine perspektivische Teilschnittdarstellung einer Statorhülse einer Motorspindel gemäss einer neunten Ausführungsform; und
- Fig. 16: ein Diagramm mit Resonanzspektren einer herkömmlichen Motorspindel und einer erfindungsgemässen Motorspindel.

### BESCHREIBUNG BEVORZUGTER AUSFÜHRUNGSFORMEN

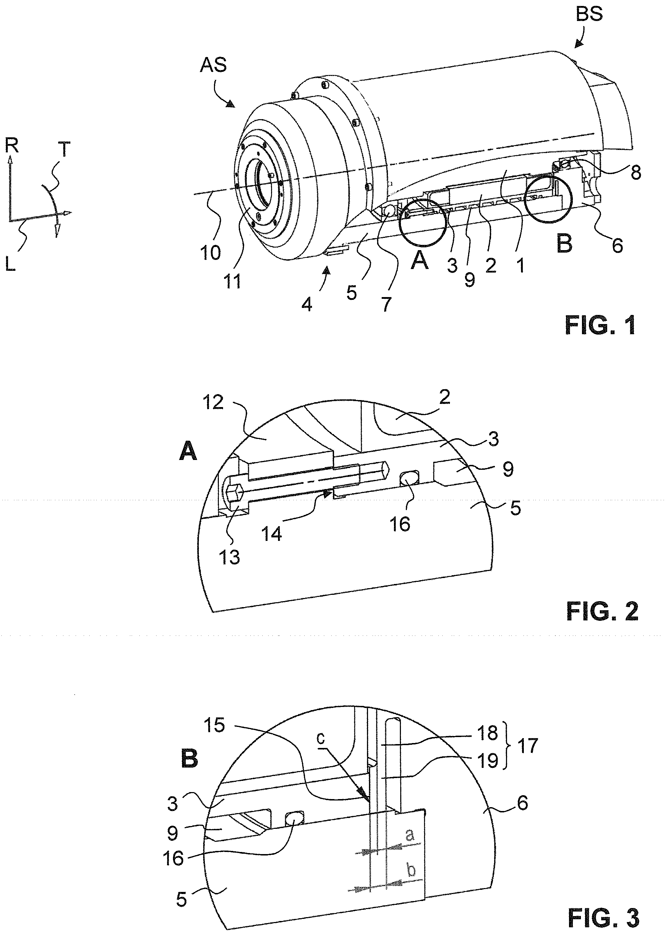

In den Figuren 1-4 ist eine erste Ausführungsform einer erfindungsgemässen Motorspindel illustriert.

Wie in der Figur 1 erkennbar ist, weist die Motorspindel einen Rotor 1 auf, der eine Spindelwelle 11 umfasst und der um eine Rotationsachse 10 drehbar in einem Gehäuse 4 gelagert ist. Die Spindelwelle 11 ragt an einem distalen Ende AS der Motorspindel aus dem Gehäuse 4 heraus. An diesem Ende können auf der Spindelwelle 11 ein Werkstück, ein Abrichtwerkzeug oder ein Verzahnwerkzeug aufgespannt werden. Das gegenüberliegende Ende der Motorspindel wird im Folgenden als das proximale Ende BS bezeichnet.

Mit seiner Rotationsachse 10 definiert die Spindelwelle eine axiale Richtung (Längsrichtung) L, ein Bündel radialer Richtungen R und eine Umfangsrichtung (tangentiale Richtung) T.

Der Rotor 1 ist an seinem Aussenumfang mit Permanentmagneten versehen. Er ist von einem Stator 2 umgeben, der mehrere Spulenpakete umfasst. Rotor 1 und Stator 2 bilden gemeinsam einen Synchronmotor. Es sind aber auch andere Arten von Motoren denkbar, insbesondere auch Asynchronmotoren.

Der Stator 2 weist an seinem Aussenumfang eine Statorhülse 3 auf, die grossflächig mit den Spulenpaketen verklebt oder vergossen ist. Auf dem Aussenumfang der Statorhülse 3 sind mehrere schraubenförmige Nuten 9 ausgebildet.

Das Gehäuse 4 bildet einen Hohlraum, der den Stator 2 vollständig aufnimmt. Das Gehäuse 4 ist mehrteilig aufgebaut. Es umfasst unter anderem eine Gehäusehülse 5 und einen proximalen Lagerdeckel 6. Diese beiden Teile sind starr miteinander verschraubt. Die im Wesentlichen zylindrische Gehäusehülse 5 umgibt die Statorhülse 3 radial. Dabei begrenzt die Gehäusehülse 5 die Nuten 9 der Statorhülse 3 radial nach aussen hin, so dass diese Nuten Kühlkanäle zwischen der Statorhülse 3 und der Gehäusehülse 5 bilden. Der Bereich zwischen der Statorhülse 3 und der Gehäusehülse 5 ist durch mindestens zwei Dichtringe 16 (siehe Figuren 2 und 3) nach aussen hin abgedichtet. Durch die Kühlkanäle wird im Betrieb ein fluides Kühlmedium geleitet, z.B. Kühlwasser, Kühlöl oder Druckluft, um den Stator 2 zu kühlen. Die Statorhülse 3 wirkt also als Kühlhülse.

In der Gehäusehülse 5 ist ein distales Lager 7 für den Rotor 1 gehalten. Dieses Lager 7 befindet sich bezüglich der axialen Richtung L distal von der Statorhülse 3 zwischen dem distalen Ende 14 der Statorhülse 3 und der Spindelnase AS. Das distale Lager 7 ist im vorliegenden Beispiel als Wälzlager ausgebildet. Es wirkt im vorliegenden Beispiel bezüglich der axialen Richtung L als Festlager, d.h. es fixiert die Lage des Rotors 1 gegenüber dem Gehäuse 4 nicht nur in radialer, sondern auch in axialer Richtung.

Im Lagerdeckel 6 ist ein proximales Lager 8 für den Rotor 1 gehalten. Dieses befindet sich bezüglich der axialen Richtung L proximal von der Statorhülse 3 zwischen dem proximalen Ende 15 der Statorhülse 3 und dem proximalen Spindelende BS. Dieses Lager 8 ist im vorliegenden Beispiel ebenfalls als Wälzlager ausgebildet. Das Lager 8 wirkt bezüglich der axialen Richtung L als Loslager, d.h. es lässt eine gewisse Bewegung des angrenzenden Rotorbereichs in axialer Richtung gegenüber dem Gehäuse 4 zu. Die Rollen des Festlagers und des Loslagers können aber auch vertauscht sein.

Der Stator 2 ist ausschliesslich über die Statorhülse 3 mit dem Gehäuse 4 verbunden. In der Figur 2 ist die Verbindung zwischen dem distalen Ende 14 der Statorhülse 3 und der Gehäusehülse 5 dargestellt. Das distale Ende 14 der Statorhülse 3 bildet eine ringförmige Stirnfläche, die in die distale Richtung weist. Die Gehäusehülse 5 weist einen sich radial nach innen erstreckenden Innenflansch 12 auf. Dieser bildet eine in die proximale Richtung weisende Gegenfläche, die komplementär zur distalen Stirnfläche der Statorhülse 3 ist und auf welcher diese distale Stirnfläche axial aufliegt. Die distale Stirnfläche wird mittels einer Vielzahl von Schraubelementen 13 reibschlüssig auf die Gegenfläche am Innenflansch 12 gepresst. Um den Reibschluss zu verbessern, können beide Flächen derart bearbeitet (z.B. angeraut) sein, dass sie einen erhöhten Reibwert besitzen. Diese Verbindung ist in axialer Richtung L, in radialer Richtung R und in Umfangsrichtung T maximal steif. Sie kann unter praktischen Gesichtspunkten als vollständig starr angesehen werden, d.h. unter normalen Betriebsbedingungen erlaubt diese Verbindung keinerlei messbare Bewegungen zwischen der Gehäusehülse 5 und dem distalen Ende 14 der Statorhülse 3 bezüglich der Richtungen L, R und T.

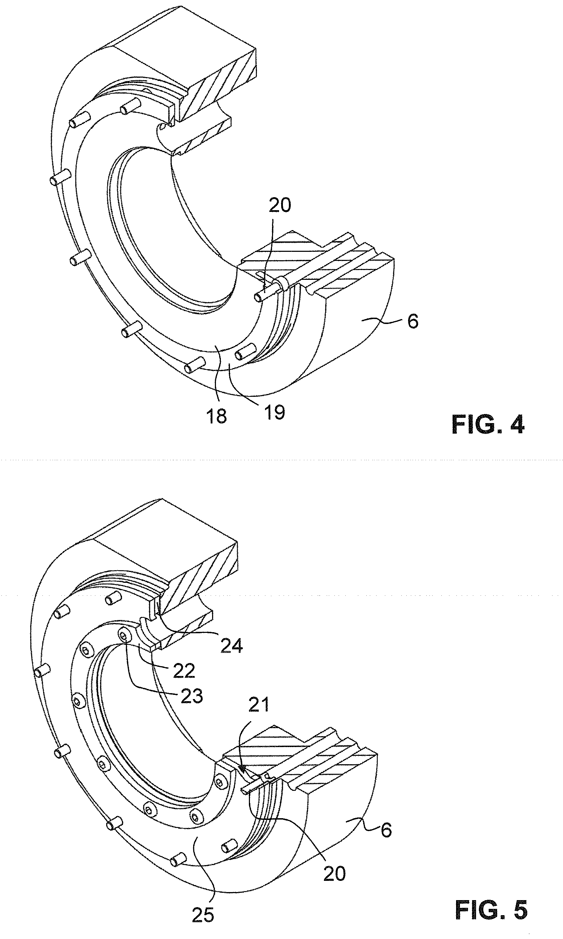

In den Figuren 3 und 4 ist die Verbindung zwischen dem proximalen Ende 15 der Statorhülse 3 und dem Gehäuse 4 dargestellt. Am distalen Ende des Lagerdeckels 6 ist in einem radial innen von der Gehäusehülse 5 gelegenen Bereich ein sich radial nach aussen erstreckender ringförmiger Verbindungsflansch 17 ausgebildet. Dieser Verbindungsflansch 17 weist einen axial nachgiebigen ringflanschförmigen geschwächten Bereich 18 mit einer Materialstärke a bezüglich der axialen Richtung auf. An seinem Innenumfang geht der geschwächte Bereich 18 einstückig in den Grundkörper des Lagerdeckels 6 über. An seinem Aussenumfang schliesst sich an den geschwächten Bereich 18 ein Befestigungsring 19 mit vorzugsweise grösserer Materialstärke b an. Die Ausführung der Materialbereiche kann aber aus konstruktiven Gründen auch so gestaltet werden, dass der geschwächte Bereich 18 die gleiche oder eine grössere Materialstärke a als der Befestigungsring 19 mit Materialstärke b aufweist. Das proximale Ende 15 der Statorhülse 3 ist reibschlüssig mit dem Befestigungsring 19 verbunden. Dazu bildet das proximale Ende 15 der Statorhülse 3 eine proximale Stirnfläche, und der Befestigungsring 19 bildet eine dazu komplementäre distale Gegenfläche. Diese Flächen werden durch eine Vielzahl von Schraubelementen 20 aufeinandergepresst, um einen Reibschluss zu erzeugen. Auch diese Flächen können zur Erhöhung der Haftreibung bearbeitet, z.B. angeraut sein. Auch diese Verbindung ist in axialer Richtung L, in radialer Richtung R und in Umfangsrichtung T maximal steif, d.h. in praktischer Hinsicht vollkommen starr. Aufgrund des geschwächten Bereichs 18 ist aber dennoch eine axiale Bewegung des proximalen Endes 15 der Statorhülse gegenüber dem Gehäuse 4 möglich.

Die Statorhülse 3 und der Lagerdeckel 6 bestehen im vorliegenden Beispiel aus Stahl. Der geschwächte Bereich 18 besitzt eine Materialstärke a in axialer Richtung (d.h. eine Dicke), die im vorliegenden Beispiel ca. 2.5 Millimeter beträgt. Dadurch wird eine ausreichende Nachgiebigkeit des geschwächten Bereichs 18 in axialer Richtung erreicht. Diese Nachgiebigkeit ergibt sich dadurch, dass der geschwächte Bereich 18 um einen Teilkreis elastisch verformbar ist. Dabei bleibt das proximale Ende 15 der Statorhülse 3 in radialer Richtung R und in Umfangsrichtung T fixiert, d.h. die Statorhülse kann mit diesem Ende Biegeschwingungen und Torsionsschwingungen nur noch stark reduziert ausführen. In radialer Richtung beträgt die Ausdehnung des geschwächten Bereichs im vorliegenden Beispiel ca. 10 Millimeter.

Eine zweite Ausführungsform einer erfindungsgemässen Motorspindel ist in der Fig. 5 illustriert. Die zweite Ausführungsform entspricht weitgehend der ersten Ausführungsform, und gleichwirkende Teile sind mit den gleichen Bezugszeichen wie bei der ersten Ausführungsform versehen. Die zweite Ausführungsform unterscheidet sich von der ersten Ausführungsform lediglich in der Art und Weise, wie die Verbindung zwischen dem proximalen Ende der Statorhülse 3 und dem Lagerdeckel 6 ausgeführt ist. Für die zweite Ausführungsform ist daher lediglich dieser Verbindungsbereich illustriert. In dieser Ausführungsform ist der Verbindungsflansch 17 der ersten Ausführungsform durch einen separat ausgebildeten Haltering 21 ersetzt. Der Haltering 21 erstreckt sich im Wesentlichen in radialer Richtung. An seinem Innenumfang ist der Haltering 21 starr mit dem Lagerdeckel 6 verbunden. Dazu wird er mit Hilfe eines Klemmrings 22 und Schraubelementen 23 gegen eine distale Stirnfläche des Lagerdeckels 6 gepresst, um einen Reibschluss zwischen dem Haltering 21 und dem Lagerdeckel 6 herzustellen. An seinem Aussenumfang ist der Haltering 21 dagegen starr mit dem proximalen Ende 15 der Statorhülse 3 verbunden. Dazu wird er mit Hilfe eines zweiten Klemmrings 24 und Schraubelementen 20 gegen die proximale Stirnfläche der Statorhülse gepresst, um auch hier einen Reibschluss herzustellen. Zwischen den mit den Klemmringen 22, 24 fixierten Bereichen des Haltering 21 verbleibt radial ein ringförmiger axial nachgiebiger Materialbereich 25.

Auch in dieser Ausführungsform ist das proximale Ende 15 der Statorhülse 3 also in radialer Richtung R und in Umfangsrichtung T gegenüber dem Gehäuse 4 fixiert, während es in axialer Richtung L beweglich ist.

Der Haltering 21 kann aus Metall oder/und Kunststoff, z.B. glas- oder carbonfaserverstärktem Kunststoff gefertigt sein. Eine andere Ausführungsform kann auch derart aufgebaut sein, dass beide Klemmringe 22 und 24 nicht verschraubt, sondern mit einem viskoelastischen Material wie Gummi oder Nitrilkautschuk durch Vulkanisieren verbunden sind. Eine bessere Dämpfung der schwingenden Teile wird damit ermöglicht. Der Haltering 21 kann in einem solchen Fall auch als Dämpfungsring bezeichnet werden.

Diese zweite Ausführungsform kann fertigungstechnisch von Vorteil sein, weil der Haltering 21 separat vom Lagerdeckel 6 gefertigt wird. Sie ist vor allem dann von Vorteil, wenn die elastischen Eigenschaften des Lagerdeckels nicht geeignet sind, den axial nachgiebigen Bereich direkt am Lagerdeckel auszubilden.

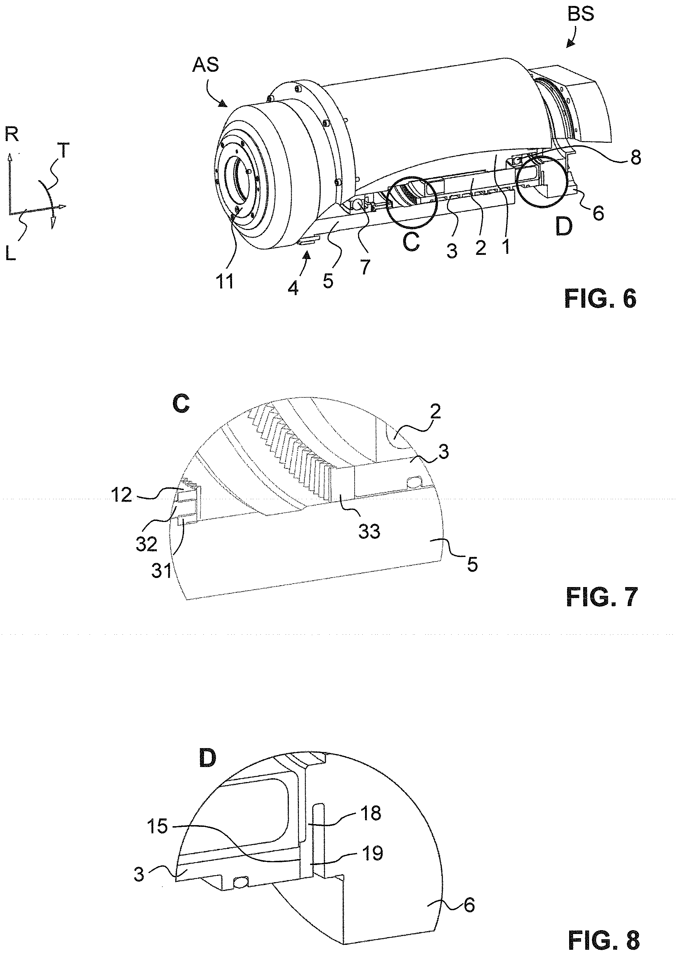

In den Figuren 6-8 ist eine dritte Ausführungsform einer erfindungsgemässen Motorspindel illustriert. Auch diese Ausführungsform entspricht weitgehend der ersten Ausführungsform, und gleichwirkende Teile sind mit den gleichen Bezugszeichen wie bei der ersten Ausführungsform versehen. Die dritte Ausführungsform unterscheidet sich von der ersten Ausführungsform im Wesentlichen dadurch, wie die starre Verbindung zwischen dem distalen Ende 14 der Statorhülse 3 und dem Gehäuse 4 ausgeführt ist. Während diese Verbindung in der ersten Ausführungsform durch einen Reibschluss realisiert ist, wird sie in der dritten Ausführungsform durch einen spielfreien Formschluss realisiert. Konkret kommt dazu eine selbstzentrierende Hirthverzahnung zum Einsatz. Die Zähne der Hirthverzahnung sind hier sehr steil ausgebildet, mit einer Zahnflankenneigung von unter 20°, hier sogar nur ca. 10°. Die Hirthverzahnung umfasst einen ersten Hirthring 31, der mit Schrauben 32 starr am Innenflansch 12 der Gehäusehülse 5 montiert ist, und einen zweiten Hirthring 33, der starr am distalen Ende der Statorhülse 3 montiert ist. Die beiden Hirthringe werden durch eine axiale Druckkraft ineinandergepresst.

Um diese axiale Druckkraft zu erzeugen, ist die Statorhülse 3 axial auf Druck vorbelastet. Dazu ist die Dicke b (vgl. Fig. 3) des Befestigungsrings 19 am proximalen Ende 15 der Statorhülse 3 derart mit Übermass gewählt, dass der geschwächte Bereich 18 nach der Montage der Motorspindel axial auf Druck vorgespannt ist. Somit kann eine Schraubverbindung zwischen dem distalen Ende 14 der Statorhülse 3 und dem Gehäuse 4 entfallen. Auf diese Weise lässt sich der Stator 2 zu Wartungszwecken ohne weiteres in proximaler Richtung aus dem Gehäuse 4 entfernen, wodurch die Wartungsfreundlichkeit der Motorspindel verbessert wird.

Die zweite und die dritte Ausführungsform können auch kombiniert werden, d.h. am distalen Ende 14 der Statorhülse 3 kann eine Hirthverzahnung gemäss der dritten Ausführungsform und am proximalen Ende 15 der Statorhülse 3 ein Haltering und/oder Dämpfungsring 21 gemäss der zweiten Ausführungsform vorgesehen sein. Eine Hirthverzahnung kann alternativ oder zusätzlich auch am proximalen Ende der Statorhülse zum Einsatz kommen, um das proximale Ende mit dem Befestigungsring 19 bzw. mit dem Haltering und/oder Dämpfungsring 21 zu verbinden.

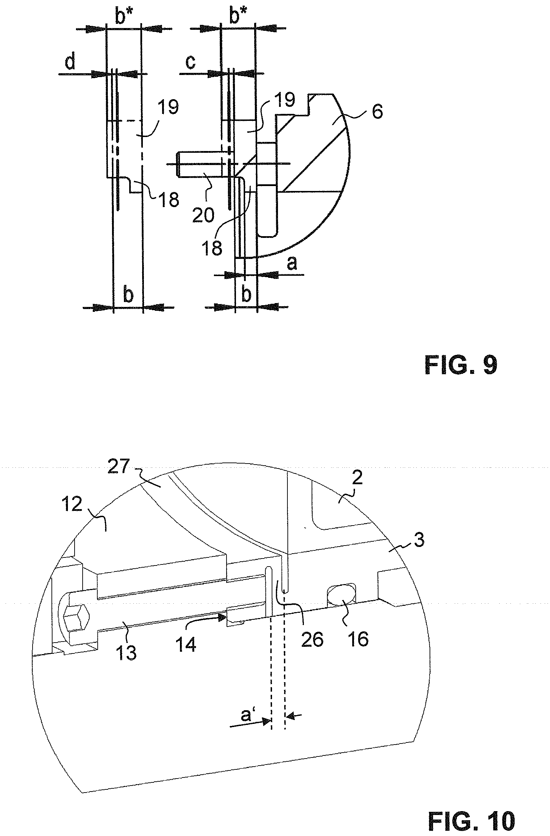

Die Figur 9 illustriert die Fertigung des Befestigungsrings 19 mit Übermass d (links) oder mit negativem Abmass c (rechts). Zunächst weist der Befestigungsring 19 eine Dicke b* auf. Der Befestigungsring 19 wird nun in Axialrichtung nachbearbeitet, so dass die Dicke des Befestigungsrings 19 auf einen Wert b < b*reduziert wird.

Wenn eine axiale Druckkraft erwünscht ist, wie dies insbesondere bei der dritten Ausführungsform erwünscht ist, wird der Befestigungsring 19 nur so weit axial nachbearbeitet, dass ein Übermass d auf die nominale Dicke bestehen bleibt. Dabei ist die nominale Dicke diejenige Dicke, bei der der geschwächte Bereich 18 nach der Montage spannungsfrei ist, bei der also vor der Verschraubung gerade kein axiales Spiel mehr zwischen der Statorhülse 3 und dem Befestigungsring 19 verbleibt, sofern die Statorhülse 3 und das Gehäuse dieselbe Temperatur haben (insbesondere eine Temperatur von 20 °C). Das Übermass beträgt vorzugsweise zwischen 5 Mikrometern und 200 Mikrometern. Das Übermass kann relativ klein gewählt werden. Es genügt, wenn die axiale Druckkraft im Stillstand der Motorspindel gerade ausreicht, um die Hirthverzahnung sicher in Eingriff zu halten. Im Betrieb der Motorspindel wird sich die Statorhülse 3 gegenüber dem Gehäuse 4 erwärmen. Dies führt zu einer Längenausdehnung der Statorhülse 3 gegenüber dem Gehäuse 4, die die axiale Druckkraft erhöht.

In alternativen Ausfiihrungsformen kann es dagegen erwünscht sein, die Statorhülse gezielt auf Zug vorzubelasten. In diesem Fall wird der Befestigungsring 19 axial so weit nachbearbeitet, bis ein negatives Abmass c auf die nominale Dicke entsteht. Wenn der Befestigungsring 19 und die Statorhülse 3 nicht miteinander verschraubt wären, so dass der geschwächte Bereich 18 spannungsfrei wäre, bestünde zwischen diesen Teilen ein Luftspalt entsprechend dem Abmass c. Das Abmass c beträgt vorzugsweise 10 bis 200 Mikrometer. Um gezielt unter allen Betriebsbedingungen der Motorspindel eine Zugkraft auf die Statorhülse zu erzeugen, sollte das Abmass betragsmässig grösser als die grösste erwartete Längenausdehnung der Statorhülse 3 relativ zum Gehäuse 4 gewählt werden. Bei einer Erwärmung der Statorhülse 3 gegenüber dem Gehäuse 4 nimmt in diesem Fall die Zugkraft zwar ab, wird aber nie Null. Es kann aber auch erwünscht sein, dass die Zugkraft bei bestimmten Betriebsbedingungen, z.B. bei Nennlast, nahezu Null ist, und das Abmass kann dazu entsprechend betragsmässig kleiner gewählt werden. Insgesamt können durch die Vorbelastung auf Zug axiale Spannungen in der Motorspindel sehr gut kontrolliert und minimiert werden.

Eine vierte Ausführungsform einer erfindungsgemässen Motorspindel ist in der Fig. 10 illustriert. Die vierte Ausführungsform entspricht weitgehend der ersten Ausführungsform, und gleichwirkende Teile sind mit den gleichen Bezugszeichen wie bei der ersten Ausführungsform versehen. Die vierte Ausführungsform unterscheidet sich von der ersten Ausführungsform lediglich in der Art und Weise, wie die Verbindung zwischen dem distalen Ende der Statorhülse 3 und dem Gehäuse 4 ausgeführt ist, nämlich axial beweglich statt starr. Für die vierte Ausführungsform ist daher lediglich dieser Verbindungsbereich illustriert. In dieser Ausführungsform ist im distalen Endbereich der Statorhülse 3 ein axial nachgiebiger, ringflanschförmiger geschwächter Bereich 26 mit axialer Materialstärke a' ausgebildet. An seinem Innenumfang geht der axial nachgiebige Bereich 26 einstückig in einen ringförmigen Befestigungsbereich 27 über, der mittels Schraubelemente 13 reibschlüssig und starr mit dem Innenflansch 12 verbunden ist. An seinem Aussenumfang geht der axial nachgiebige Bereich 26 einstückig in die eigentliche Statorhülse 3 über. Auf diese Weise ist die Verbindung der Statorhülse 3 mit dem Gehäuse 4 nicht nur am proximalen Ende, sondern auch am distalen Ende axial nachgiebig. Statt an der Statorhülse 3 kann der axial nachgiebige Bereich 26 auch am Innenflansch 12 der Gehäusehülse 5 ausgebildet sein, sofern die Gehäusehülse aus einem genügend elastischen Material wie zum Beispiel Stahl gefertigt ist, oder es kann zwischen dem distalen Ende der Statorhülse 3 und dem Innenflansch 12 ein separates axial nachgiebiges Zwischenbauteil, ähnlich zum Haltering 21 der zweiten Ausführungsform, vorgesehen sein.

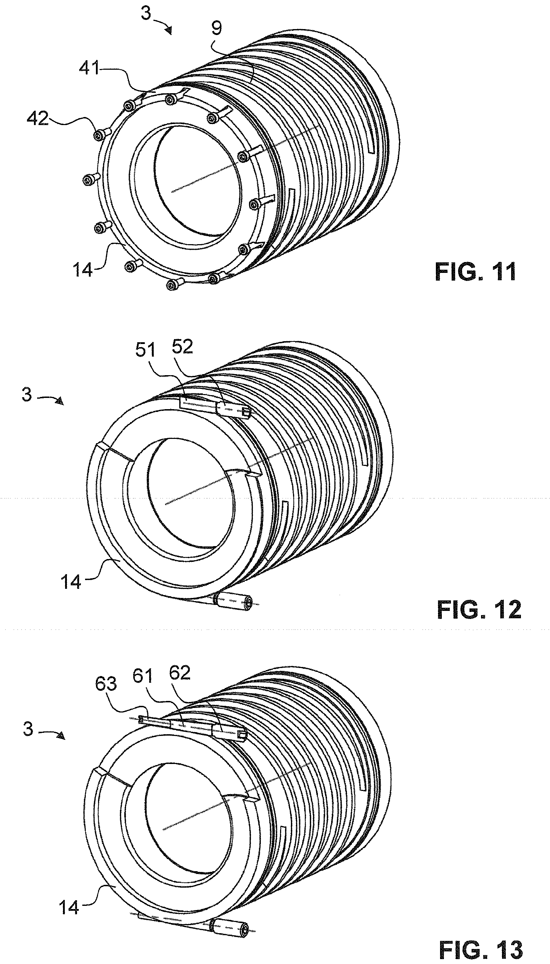

In den Figuren 11-15 sind eine fünfte, sechste, siebente, achte und neunte Ausführungsform einer erfindungsgemässen Motorspindel illustriert. Diese Ausführungsformen unterscheiden sich von der ersten Ausführungsform wiederum nur durch die Art und Weise, wie die Statorhülse 3 an ihrem distalen Ende mit dem Gehäuse 4 verbunden ist. Dementsprechend sind in den Figuren 11-15 jeweils nur die Statorhülse 3 und die Verbindungskomponenten zum Gehäuse dargestellt. Gleichwirkende Teile sind mit den gleichen Bezugszeichen wie bei der ersten Ausführungsform versehen. In all diesen Ausführungsformen ist die Verbindung des distalen Endes der Statorhülse 3 mit dem Gehäuse 4 starr.

In der fünften Ausführungsform der Fig. 11 ist am distalen Ende der Statorhülse 3 eine konische Anpressfläche 41 ausgebildet, die koaxial zur Rotationsachse 10 angeordnet ist. An der Gehäusehülse 5 ist dementsprechend eine komplementäre Gegenfläche ausgebildet (nicht zeichnerisch dargestellt). Beide Flächen können zur Verbesserung der Haftreibung entsprechend bearbeitet, z.B. angeraut sein. Die beiden Flächen werden durch Schraubelemente 42 aufeinandergepresst. Dadurch entsteht eine reibschlüssige Verbindung zwischen dem distalen Ende der Statorhülse 3 und dem Gehäuse. Die fünfte Ausfiihrungsform ermöglicht im Vergleich zu ersten Ausführungsform einen verbesserten Reibschluss zwischen dem distalen Ende der Statorhülse 3 und dem Gehäuse.

In der sechsten Ausführungsform der Fig. 12 wird das distale Ende der Statorhülse 3 durch zwei tangentiale Zylinderstifte 51 im Gehäuse 4 fixiert. Die Zylinderstifte 51 sind durch Bohrungen des Gehäuses (nicht zeichnerisch dargestellt) in sacklochartige tangentiale Ausnehmungen am Aussenumfang der Statorhülse 3 eingeschoben, wobei sie aus den Ausnehmungen in das Gehäuse hinein hervorstehen, so dass sie eine formschlüssige Verbindung zwischen Gehäuse und Statorhülse herstellen. Die Zylinderstifte 51 werden durch tangentiale Druckschrauben 52, deren Aussengewinde in nicht zeichnerisch dargestellte Innengewinde der Gehäusehülse eingreifen, gegen den Boden der jeweiligen Ausnehmung gepresst. Dadurch pressen die Druckschrauben 52 via die Zylinderstifte 51 die Statorhülse seitlich gegen die Innenwand der Gehäusehülse. Dadurch wird zusätzlich ein Reibschluss zwischen dem Aussenumfang der Statorhülse 3 und dem Gehäuse hergestellt, der das ansonsten unvermeidliche Spiel in Längsrichtung der Zylinderstifte 51 beseitigt. Insofern ist die resultierende Verbindung grundsätzlich formschlüssig, weist aber auch einen reibschlüssigen Anteil auf. Die Anordnung der Zylinderstifte 51 und Druckschrauben 52 ist besonders gut im oberen Bereich der Fig. 12 erkennbar, in dem die Statorhülse in einem Teilschnitt senkrecht zur Längsachse dargestellt ist. Ein Vorteil dieser Ausgestaltung liegt darin, dass die Druckschrauben 52 leicht von aussen zugänglich sind, um zu Servicezwecken den Stator vom Gehäuse zu lösen, ohne dass dazu die gesamte Spindelnase entfernt zu werden braucht.

In der siebenten Ausführungsform der Figur 13 ist eine weitere Variante der Verbindung zwischen dem distalen Ende der Statorhülse 3 und dem Gehäuse illustriert. Hier kommen tangentiale Kegelstifte 61 zum Einsatz, die durch jeweils eine tangentiale Druckschraube 62, die mit ihrem Aussengewinde in ein Innengewinde der Gehäusehülse eingreift, fixiert werden. Die Kegelstifte werden in tangentialer Richtung in einen radialen Zwischenraum zwischen der Statorhülse und der Gehäusehülse eingepresst. Auf diese Weise entsteht eine spielfreie formschlüssige Verbindung. Auch diese Verbindung lässt sich zu Servicezwecken leicht lösen. Dazu dienen tangentiale Gegendruckschrauben 63.

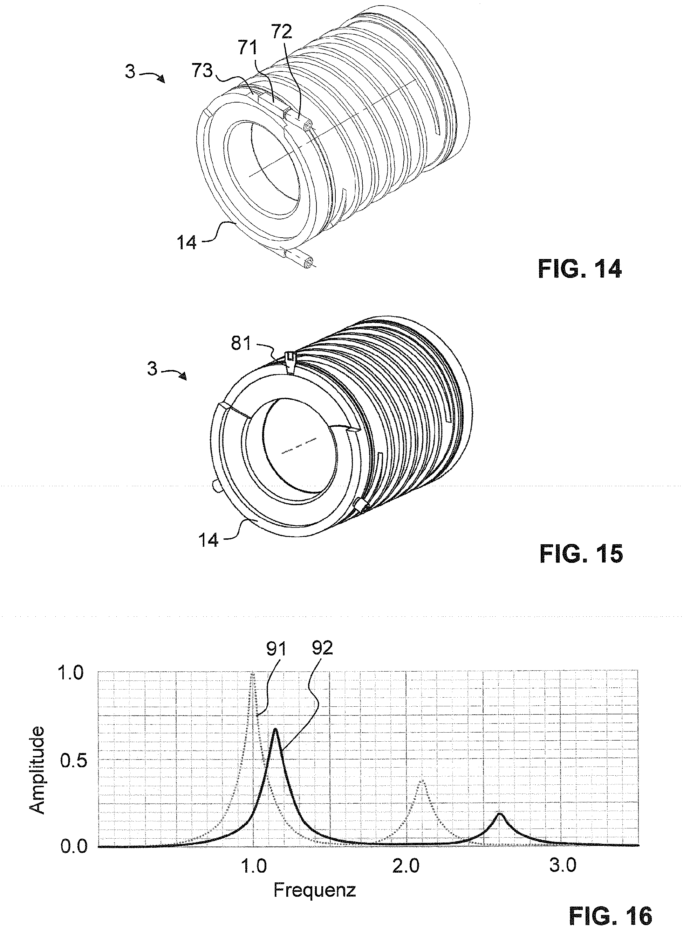

Statt rotationssymmetrischer Kegelstifte können auch nicht rotationssymmetrische Keile zum Einsatz kommen, wie dies in der achten Ausführungsform der Fig. 14 illustriert ist. In diesem Beispiel werden prismatische Keile 71 mit Hilfe von Druckschrauben 72 in jeweils einen radialen Zwischenraum zwischen einer zur tangentialen Richtung angeschrägten Auflagefläche 73 an der Statorhülse und einer entsprechenden Auflagefläche an der Gehäusehülse eingepresst. Statt prismatischer Keile können auch allgemeine polygonale Keile zum Einsatz kommen.

Auch in der neunten Ausführungsform der Fig. 15 wird eine spielfreie formschlüssige Verbindung hergestellt. Hierzu kommen radiale konische Druckschrauben 81 zum Einsatz, die mit ihrem Aussengewinde in jeweils ein Innengewinde der Gehäusehülse eingreifen. Auch diese Verbindung lässt sich zu Servicezwecken leicht lösen.

Es bestehen eine Vielzahl weiterer Möglichkeiten, eine reibschlüssige oder formschlüssige Verbindung des distalen Endes der Statorhülse mit dem Gehäuse herzustellen. Alle dargestellten Verbindungsarten können auch am proximalen Ende der Statorhülse eingesetzt werden, um die Statorhülse mit dem axial nachgiebigen Bereich bzw. dem Dämpfungsring zu verbinden.

Ein Vorteil der ersten, zweiten und fünften Ausführungsformen besteht darin, dass die Verbindung zwischen dem distalen Ende der Statorhülse und dem Gehäuse geeignet ist, Biegemomente um eine zur Längsrichtung orthogonale Richtung zu übertragen. Zusammen mit der radial und tangential steifen Verbindung am proximalen Ende der Statorhülse trägt die Statorhülse damit zur Verbesserung der Biegesteifigkeit des Gehäuses bei.

Die Figur 16 zeigt ein Diagramm mit zwei Resonanzkurven, welche das Torsionsverhalten einer Motorspindel darstellen. Die erste Resonanzkurve 91 wurde für eine Motorspindel berechnet, deren Stator nur einseitig mit dem Gehäuse verbunden ist. Diese Motorspindel zeigte eine starke Resonanz bei einer Frequenz, die in der Figur 16 willkürlich als Frequenz 1.0 bezeichnet wird. Die zweite Resonanzkurve 92 wurde für eine erfindungsgemässe Motorspindel gemäss der ersten Ausführungsform berechnet. Man erkennt, dass zwar nach wie vor im unteren Frequenzbereich Resonanzen auftreten. Diese besitzen jedoch eine deutlich höhere Frequenz und eine deutlich geringere Amplitude. Dies deutet darauf hin, dass der Stator nun gegenüber dem Gehäuse torsionssteifer ist und Torsionsschwingungen zudem weniger ausgeprägt sind.

### BEZUGSZEICHENLISTE

- 1: Rotor
- 2: Stator
- 3: Statorhülse
- 4: Gehäuse
- 5: Gehäusehülse
- 6: Lagerdeckel
- 7: vorderes Lager
- 8: hinteres Lager
- 9: schraubenförmige Nut
- 10: Rotationsachse
- 12: Innenflansch
- 13: Schraubelement
- 14: vordere Stirnfläche
- 15: hintere Stirnfläche
- 16: Dichtring
- 17: Verbindungsflansch
- 18: axial nachgiebiger Bereich
- 19: Befestigungsring
- 20: Schraubelement
- 21: Haltering und/ oder Dämpfungsring
- 22: Klemmring
- 23: Schraubelement
- 24: Klemmring
- 25: axial nachgiebiger Bereich
- 26: axial nachgiebiger Bereich
- 27: Befestigungsbereich
- 31: erster Hirthring
- 32: Befestigungsschraube
- 33: zweiter Hirthring
- 41: konische Anpressfläche
- 42: Schraubelement
- 51: Zylinderstift
- 52: Druckschraube
- 61: Kegelstift
- 62: Druckschraube
- 63: Gegendruckschraube
- 71: Keil
- 72: Druckschraube
- 73: Auflagefläche
- 81: konische Druckschraube
- 91,92: Resonanzkurve

- A, B, C, D: Detailansichten
- AS: Spindelnase
- BS: hinteres Spindelende
- L: Längsrichtung
- R: radiale Richtung
- T: Umfangsrichtung
- a, a': Dicke des geschwächten Bereichs
- b: Dicke des Befestigungsrings
- b*: Dicke vor Bearbeitung
- c: Abmass
- d: Übermass

## Patentansprüche

1. Elektrische Maschine, aufweisend:
einen Rotor (1), der um eine Rotationsachse drehbar gelagert ist und mit seiner Rotationsachse eine Axialrichtung definiert;
einen den Rotor (1) radial umgebenden Stator (2) mit einem distalen Ende und einem proximalen Ende; und
ein den Stator (2) radial umgebendes Gehäuse (4),
**dadurch gekennzeichnet, dass** der Stator (2) an seinem distalen Ende und an seinem proximalen Ende radial und torsional steif mit dem Gehäuse (4) verbunden ist, und dass der Stator an seinem distalen Ende und/oder an seinem proximalen Ende axial beweglich mit dem Gehäuse (4) verbunden ist.

2. Elektrische Maschine nach Anspruch 1, wobei der Stator (2) eine den Stator (2) radial nach aussen hin begrenzende Statorhülse (3) aufweist, und wobei der Stator (2) mittels der Statorhülse (3) mit dem Gehäuse (4) verbunden ist.

3. Elektrische Maschine nach einem der vorgehenden Ansprüche, wobei der Stator (2) an seinem distalen Ende und/oder an seinem proximalen Ende über einen axial nachgiebigen Materialbereich (18; 25; 26) mit dem Gehäuse (4) verbunden ist.

4. Elektrische Maschine nach Anspruch 3, wobei der axial nachgiebige Materialbereich (18; 25; 26) in Axialrichtung in linearer Näherung eine Federkonstante von höchstens 5000 Newton pro Mikrometer aufweist.

5. Elektrische Maschine nach Anspruch 3 oder 4, wobei der axial nachgiebige Materialbereich (18; 25; 26) ringflanschförmig ist.

6. Elektrische Maschine nach Anspruch 5, wobei der axial nachgiebige Materialbereich (18; 25; 26) einen Innenumfang und einen Aussenumfang aufweist, wobei der axial nachgiebige Materialbereich (18; 25) an seinem Aussenumfang axial, radial und torsional steif mit dem Stator (2) verbunden ist, und wobei der axial nachgiebige Materialbereich (18; 25; 26) an seinem Aussenumfang axial, radial und torsional steif mit dem Gehäuse (4) verbunden ist, oder umgekehrt.

7. Elektrische Maschine nach einem der Ansprüche 3-6, wobei der axial nachgiebige Materialbereich (18; 26) einstückig mit einem Gehäuseelement, insbesondere einem Lagerdeckel (6) des Gehäuses (4), ausgebildet und axial, radial und torsional steif mit dem Stator (2) verbunden ist, oder wobei der axial nachgiebige Materialbereich (18; 26) einstückig mit einem Statorelement ausgebildet ist und axial, radial und torsional steif mit einem Gehäuseelement verbunden ist.

8. Elektrische Maschine nach einem der Ansprüche 3-6, welche einen Haltering (21) aufweist, der separat vom Stator (2) und vom Gehäuse (4) ausgebildet ist, wobei der Haltering (21) sowohl mit dem Stator (2) als auch mit dem Gehäuse (4) axial, radial und torsional steif verbunden ist und den axial nachgiebigen Materialbereich (25) bildet.

9. Elektrische Maschine nach Anspruch 8, welche einen ersten und einen zweiten Klemmring (22, 24) aufweist, wobei der Haltering (21) an seinem Aussenumfang mit dem ersten Klemmring (22) auf den Stator (2) und an seinem Innenumfang durch den zweiten Klemmring auf das Gehäuse (4) aufgepresst ist, oder umgekehrt.

10. Elektrische Maschine nach einem der vorhergehenden Ansprüche, wobei der Stator (2) derart mit dem Gehäuse (4) verbunden ist, dass eine axiale Zugkraft oder eine axiale Druckkraft auf den Stator (2) wirkt, wenn der Stator (2) und das Gehäuse (4) dieselbe Temperatur aufweisen.

11. Elektrische Maschine nach einem der vorhergehenden Ansprüche, wobei der Stator (2) an seinem distalen Ende axial, radial und torsional steif mit dem Gehäuse (4) verbunden ist und nur an seinem proximalen Ende radial und torsional steif, aber axial beweglich mit dem Gehäuse (4) verbunden ist.

12. Elektrische Maschine nach einem der vorhergehenden Ansprüche, wobei die elektrische Maschine distal vom distalen Ende des Stators (2) eine erste Lagerstelle (7) für den Rotor (1) aufweist und proximal vom proximalen Ende des Stators (2) eine zweite Lagerstelle (8) für den Rotor (1) aufweist, und wobei die erste Lagerstelle (7) axial als Festlager und die zweite Lagerstelle (8) axial als Loslager ausgebildet ist.

13. Elektrische Maschine nach einem der vorhergehenden Ansprüche, wobei der Rotor (1) und der Stator (2) einen elektrischen Motor bilden.

14. Elektrische Maschine nach einem der vorhergehenden Ansprüche, wobei die elektrische Maschine eine Motorspindel für eine Werkzeugmaschine ist.

15. Herstellverfahren für eine elektrische Maschine nach einem der vorhergehenden Ansprüche, umfassend:
Bereitstellen einer Statorhülse (3) und eines mit einem Ende der Statorhülse zu verbindenden Elements, wobei zwischen der Statorhülse (3) und dem Element ein axiales Übermass besteht;
Einbauen der Statorhülse (3) und des Elements mit gleicher Temperatur, um das Übermass zu ermitteln;
Trennen der Statorhülse (3) und des Elements;
Nachbearbeiten des Endes der Statorhülse (3) und/oder des zu verbindenden Elements derart,
(a) dass das axiale Übermass beseitigt wird, oder
(b) dass ein reduziertes axiales Übermass (d) bestehen bleibt, um nach Montage der elektrischen Maschine eine axiale Druckkraft auf die Statorhülse (3) auszuüben, oder
(c) dass ein axiales Abmass (c) erzeugt wird, um nach Montage der elektrischen Maschine eine axiale Zugkraft auf die Statorhülse auszuüben; und erneutes Einbauen der Statorhülse (3) und des Elements.

## Claims

1. An electrical machine, comprising:
a rotor (1) that is rotatably supported around an axis of rotation and defines an axial direction with its axis of rotation;
a stator (2) radially surrounding the rotor (1), the stator having a distal end and a proximal end; and
a housing (4) radially surrounding the stator (2),
**characterised in that** the stator (2), at its distal end and at its proximal end, is connected to the housing (4) in a radially and torsionally stiff manner, and that the stator (2), at its distal end and/or at its proximal end, is connected to the housing (4) in an axially moveable manner.

2. The electrical machine as claimed in claim 1, wherein the stator (2) comprises a stator sleeve (3) that radially delimits the stator (2) outwardly, and wherein the stator (2) is connected to the housing (4) by means of the stator sleeve (3).

3. The electrical machine as claimed in any one of the preceding claims, wherein the stator (2), at its distal end and/or at its proximal end, is connected to the housing (4) via an axially compliant material section (18; 25; 26).

4. The electrical machine as claimed in claim 3, wherein the axially compliant material section (18; 25; 26) has a spring constant in an axial direction and in linear approximation of at most 5000 Newton per micrometer.

5. The electrical machine as claimed in claim 3 or claim 4, wherein the axially compliant material section (18; 25; 26) has an annular flange shape.

6. The electrical machine as claimed in claim 5, wherein the axially compliant material section (18; 25; 26) has an inner circumference and an outer circumference, wherein the axially compliant material section (18; 25) is connected at its outer circumference axially, radially and torsionally stiff with the stator (2), and wherein the axially compliant material section (18; 25; 26) is connected at its outer circumference axially, radially and torsionally stiff with the housing (4), or vice versa.

7. The electrical machine as claimed in any one of the claims 3-6, wherein the axially compliant material section (18; 26) is formed in one piece with a housing element, in particular a bearing shield (6) of the housing (4), and is connected axially, radially and torsionally stiff with the stator (2), or wherein the axially compliant material section (18; 26) is formed in one piece with a stator element and connected axially, radially and torsionally stiff with a housing element.

8. The electrical machine as claimed in any one of the claims 3-6, comprising a retaining ring (21) that is formed separately from the stator (2) and from the housing (4), wherein the retaining ring (21) is connected axially, radially and torsionally stiff both with the stator (2) as well as the housing (4) and forms the axially compliant material section (25).

9. The electrical machine as claimed in claim 8, comprising a first and a second clamping ring (22, 24), wherein the retaining ring (21) is pressed at its outer circumference onto the stator (2) by the first clamping ring (22) and at its inner circumference onto the housing (4) by the second clamping ring, or vice versa.

10. The electrical machine as claimed in any one of the preceding claims, wherein the stator (2) is connected to the housing (4) such that an axial tensile force or an axial compressive force acts on the stator (2) if the stator (2) and the housing (4) exhibit the same temperature.

11. The electrical machine as claimed in any one of the preceding claims, wherein the stator (2) is connected at its distal end axially, radially and torsionally stiff to the housing (4), and wherein the stator is connected only at its proximal end radially and torsionally stiff but axially movably to the housing (4).

12. The electrical machine as claimed in any one of the preceding claims, wherein the electrical machine comprises a first bearing (7) for the rotor (1) distally from the distal end of the stator (2) and comprises a second bearing (8) for the rotor (1) proximally from the proximal end of the stator (2), and wherein the first bearing (7) is formed axially as a fixed bearing and the second bearing (8) is formed axially as a floating bearing.

13. The electrical machine as claimed in any one of the preceding claims, wherein the rotor (1) and the stator (2) form an electrical motor.

14. The electrical machine as claimed in any one of the preceding claims, wherein the electrical machine is a motor spindle for a machine tool.

15. A manufacturing method for an electrical machine as claimed in any one of the preceding claims, comprising:
providing a stator sleeve (3) and an element to be connected to one end of the stator sleeve, wherein an axial oversize exists between the stator sleeve (3) and the element;
installing the stator sleeve (3) and the element when they exhibit the same temperature to determine the oversize;
separating the stator sleeve (3) and the element;
refinishing the end of the stator sleeve (3) and/or the element to be connected in such a manner,
(a) that the axial oversize will be eliminated, or
(b) that a reduced axial oversize (d) remains to exert an axial compressive force on the stator sleeve (3) following assembly of the electrical machine, or
(c) that a negative axial allowance (c) is created to exert an axial tensile force on the stator sleeve following assembly of the electrical machine; and
refitting the stator sleeve (3) and the element.

## Revendications

1. Machine électrique qui comprend
un rotor (1), qui est monté rotatif autour d'un axe de rotation et définit une direction axiale avec son axe de rotation;
un stator (2) entourant radialement le rotor (1) avec une extrémité distale et une extrémité proximale; et
un boîtier (4) entourant radialement le stator(2),
**caractérisée en ce que** le stator (2) est relié au boîtier (4) de façon rigide radialement et en torsion au niveau de son extrémité distale et de son extrémité proximale, et que le stator est relié au niveau de son extrémité distale et/ou de son extrémité proximale de manière mobile axialement au boîtier (4)

2. Machine électrique selon la revendication 1, dans laquelle le stator (2) possède un manchon de stator (3) délimitant le stator (2) vers l'extérieur radialement, et dans laquelle le stator (2) est connecté au boîtier (4) au moyen du manchon de stator (3).

3. Machine électrique selon l'une des revendications précédentes, dans laquelle le stator (2) est relié au boîtier (4) au niveau son extrémité distale et/ou au niveau de son extrémité proximale via une zone de matériau axialement flexible (18; 25; 26).

4. Machine électrique selon la revendication 3, dans laquelle la région de matériau axialement flexible (18; 25; 26) présente une constante de ressort d'au plus 5000 Newtons par micromètre dans la direction axiale en approximation linéaire.

5. Machine électrique selon la revendication 3 ou 4, dans laquelle la région de matériau axialement flexible (18; 25; 26) est en forme de bride annulaire.

6. Machine électrique selon la revendication 5, dans laquelle la zone de matériau axialement flexible (18; 25; 26) présente une circonférence interne et une circonférence externe, dans laquelle la zone de matériau axialement flexible (18; 25) est reliée de manière rigide axialement, radialement et en torsion avec le stator (2) sur sa circonférence externe, et dans laquelle la région de matériau axialement flexible (18; 25; 26) est reliée de manière rigide axialement, radialement et en torsion au boîtier (4) sur sa circonférence externe, ou inversement.

7. Machine électrique selon l'une des revendications 3 à 6, dans laquelle la région de matériau axialement flexible (18; 26) est formée d'une seule pièce avec un élément de boîtier, en particulier avec un couvercle de palier (6) du boîtier (4), et est reliée de manière rigide axialement, radialement et en torsion avec le stator (2), ou dans laquelle la région de matériau axialement flexible (18; 26) est formée d'une seule pièce avec un élément de stator et est reliée de manière rigide axialement, radialement et en torsion à un élément de boîtier.

8. Machine électrique selon l'une des revendications 3 à 6, qui possède une bague de retenue (21), qui est formée séparément du stator (2) et du boîtier (4), la bague de retenue (21) étant reliée à la fois avec le stator (2) et avec le boîtier (4) de manière rigide axialement, radialement et en torsion et formant la région de matériau axialement flexible (25).

9. Machine électrique selon la revendication 8, qui a une première et une deuxième bague de serrage (22, 24), la bague de retenue (21) étant pressée sur le boîtier (4) sur sa circonférence externe avec la première bague de serrage (22) sur le stator (2) et sur sa circonférence interne avec la deuxième bague de serrage, ou inversement.

10. Machine électrique selon l'une des revendications précédentes, dans laquelle le stator (2) est relié au boîtier (4) de telle sorte qu'une force de traction axiale ou une force de compression axiale agit sur le stator (2) lorsque le stator (2) et le boîtier (4) ont la même température.

11. Machine électrique selon l'une des revendications précédentes, dans laquelle le stator (2) est relié au boîtier (4) de manière rigide axialement, radialement et en torsion à son extrémité distale et est uniquement relié au boîtier (4) de manière rigide radialement et en torsion mais mobile axialement à son extrémité proximale.

12. Machine électrique selon l'une des revendications précédentes, dans laquelle la machine électrique présente un premier point de montage (7) pour le rotor (1) distal à l'extrémité distale du stator (2) et un deuxième point de montage (8) pour le rotor (1) proximal à l'extrémité proximale du stator (2), et dans laquelle le premier point de montage (7) est conçu axialement comme un roulement fixe et le deuxième point de montage (8) est conçu axialement comme un roulement flottant.

13. Machine électrique selon l'une des revendications précédentes, dans laquelle le rotor (1) et le stator (2) forment un moteur électrique.

14. Machine électrique selon l'une des revendications précédentes, dans laquelle la machine électrique est une broche moteur pour une machine-outil.

15. Procédé de fabrication pour une machine électrique selon l'une des revendications précédentes, comprenant:
la fourniture d'un manchon de stator (3) et d'un élément à connecter à une extrémité du manchon de stator, dans lequel un surdimensionnement axial entre le manchon de stator (3) et l'élément existe;
l'installation du manchon de stator (3) et l'élément à la même température pour déterminer le surdimensionnement;
la séparation du manchon de stator (3) et de l'élément;
le re-travail de l'extrémité du manchon de stator (3) et / ou l'élément à connecter de telle manière
a. que le surdimensionnement axial soit supprimé, ou
b. qu'un surdimensionnement axial réduit (d) subsiste afin d'exercer une force de compression axiale sur le manchon de stator (3) après l'assemblage de la machine électrique, ou
c. qu'une dimension axiale (c) est générée afin d'exercer une force de traction axiale sur le manchon de stator après l'assemblage de la machine électrique; et
i. la réinstallation du manchon de stator (3) et de l'élément.
